# EUROPÄISCHE PATENTSCHRIFT

(11) **EP 1 850 105 B1**
(45) Veröffentlichungstag und Bekanntmachung des Hinweises auf die Patenterteilung: **20.01.2010**
(21) Anmeldenummer: 06008575.0
(22) Anmeldetag: 25.04.2006
(51) Int. Cl.: G01L 3/10, G01N 3/22

(54) **Verfahren zum Überwachen der Torsionsfestigkeit einer Welle**
Method for monitoring the torsional strength of a shaft
Procédé destiné à surveiller la résistance à la torsion d'un arbre

(43) Veröffentlichungstag der Anmeldung: 31.10.2007
(73) Patentinhaber: Prüftechnik Dieter Busch AG, 85737 Ismaning (DE)
(72) Erfinder: Lösl, Johann, 84172 Buch am Erlbach (DE); Schühle, Roland, 88213 Ravensburg (DE)
(74) Vertreter: Schwan - Schwan - Schorer

(56) Entgegenhaltungen:
- WO-A-2005/051811
- DE-A1- 2 928 155
- DE-A1- 19 540 415
- GB-A- 2 240 958
- US-A- 3 982 419
- US-A- 4 020 685

## Beschreibung

Die vorliegende Erfindung betrifft ein Verfahren zum Überwachen der Torsionsfestigkeit einer Welle, die fest mit einem ersten Zahnrad und einem zweiten, zu dem ersten Zahnrad axial beabstandeten Zahnrad verbunden ist, wobei auf mindestens eines der beiden Zahnräder ein Drehmoment wirkt, welches in die Welle eingeleitet wird, so dass die Welle in dem Bereich zwischen den beiden Zahnrädern auf Torsion beansprucht wird. Ferner betrifft die Erfindung ein System mit einer solchen Welle und einer Anordnung zum Überwachen der Torsionsfestigkeit der Welle.

Bei Fahrtreppen ist es aus Sicherheitsgründen erforderlich, dass jederzeit gewährleistet ist, dass die Antriebswelle eine hinreichende Torsionsfestigkeit aufweist, so dass keine Gefahr eines Wellenbruchs besteht. Zu diesem Zweck ist es aufgrund der im Betrieb der Antriebswelle auftretenden Verschleißerscheinungen, wie beispielsweise Materialermüdung durch Schwingungsbeanspruchung, zweckmäßig, die Welle in regelmäßigen Abständen auf Beschädigungen hin zu untersuchen. Dies erfolgt üblicherweise durch eine Untersuchung der Antriebswelle mittels Ultraschall oder Radiographie, wobei mit diesen Verfahren Schäden in der Materialstruktur, wie Risse, erkannt werden können, um die Antriebswelle bei erkannten Schäden rechtzeitig auszutauschen. Nachteilig bei diesen Verfahren ist der relativ große Aufwand. Insbesondere muß für eine solche Untersuchung üblicherweise die Fahrtreppe stillgelegt werden.

Aus der WO 2005/051811 A1 ist es bekannt, zur Überwachung des Antriebes einer Fahrtreppe die Drehzahl zweier im Normalbetrieb synchron rotierender Räder zu überwachen und bei Überschreiten einer bestimmten Drehzahldifferenz ein Bremsen der Fahrtreppe auszulösen.

Die GB 2 240 958 A offenbart ein Verfahren zur Überwachung der Synchronisation zwischen der Geländer- und Stufengeschwindigkeit einer Fahrtreppe. Hierfür wird die relative Phasenlage zweier fest mit der Geländerantriebswelle verbundener Impulsgeber-Zahnräder durch berührungslose Sensoren gemessen und daraus die Torsion der Welle bestimmt. Die Torsion ist ein Maß für die Relativgeschwindigkeit.

Die US 3, 982,419 betrifft einen Drehmomentprüfstand, wobei das in einen ersten Wellenabschnitt eingeleitete Drehmoment gemessen wird. Der erste Wellenabschnitt ist mit einem zweiten Wellenabschnitt mittels einer Kupplung, beispielsweise einer Schraubenfeder, verbunden, wobei der erste Wellenabschnitt eine erste Impulsscheibe und der zweite Wellenabschnitt eine zweite Impulsscheibe trägt und die den jeweiligen Drehwinkel angebenden Signale der Impulsscheiben ausgewertet werden.

Die US 4,020,685 betrifft ein Phasenmeter für Drehmomentmessungen, beispielsweise an einer Gasturbine, wobei die Phasenverschiebung zwischen zwei Signalen ausgewertet wird, die von je einem Sensor ausgegeben werden, welcher jeweils die Drehbewegung eines Zahnrads wiedergibt, das fest auf einem von zwei Wellenabschnitten sitzt, welche mittels einer torsionsnachgiebigen Kupplung verbunden sind.

Die DE 195 40 415 A1 betrifft eine Fahrtreppe mit einer Personenzähleinrichtung, die durch eine Belastungsmesseinrichtung realisiert ist.

Es ist Aufgabe der vorliegenden Erfindung, ein Verfahren zum Überwachen der Torsionsfestigkeit einer Welle eines Fahrtreppenantriebs zu schaffen, welches mit geringem Aufwand ausgeführt werden kann und dennoch hinreichend genaue Ergebnisse liefert. Ferner soll ein entsprechendes System mit einer solchen Welle und einer entsprechenden Überwachungsanordnung geschaffen werden.

Diese Aufgabe wird erfindungsgemäß gelöst durch ein Verfahren gemäß Anspruch 1 bzw. ein System gemäß Anspruch 18. Die erfindungsgemäße Lösung hat den Vorteil, dass dadurch, dass mittels zweier Sensoren der Phasenversatz der Drehung der beiden Zahnräder ermittelt wird, auf einfache Weise die Torsionsfestigkeit des zwischen den beiden Zahnrädern liegenden, auf Torsion beanspruchten Wellenabschnitts überwacht werden kann.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
Fig. 1 eine schematische Darstellung der Antriebswelle einer Fahrtreppe mit Zahnrädern sowie einer erfindungsgemäßen Anordnung zum Überwachen der Torsionsfestigkeit der Welle; und
Fig. 2 ein Beispiel für den zeitlichen Verlauf der von den Sensoren der Überwachungsanordnung abgegebenen Signale.

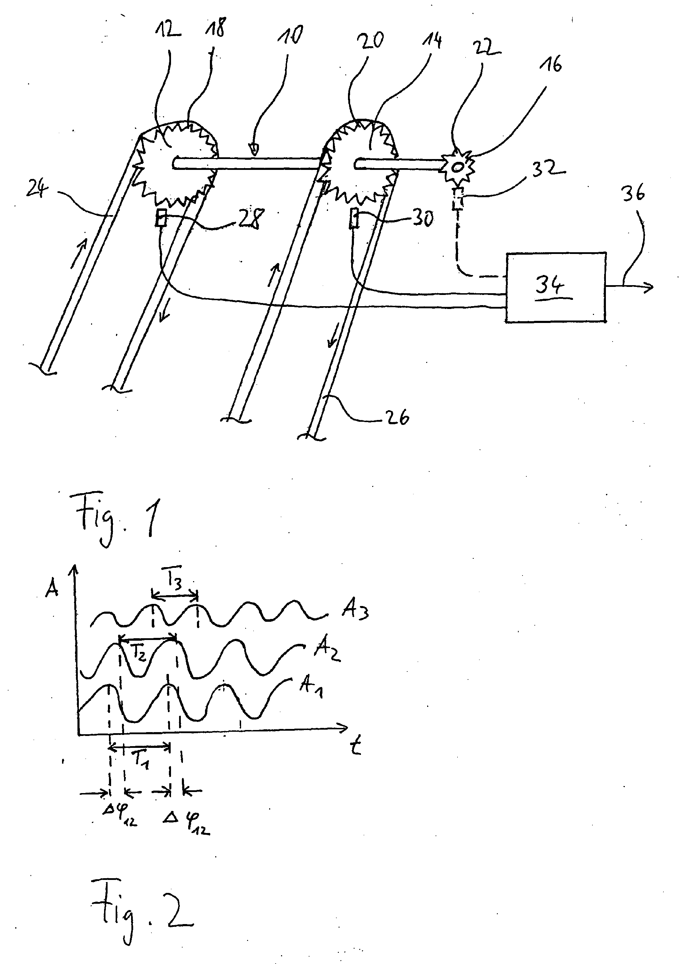

In Fig. 1 ist schematisch ein Teil eines Antriebs für eine Fahrtreppe dargestellt, der eine Antriebswelle 10, ein erstes Zahnrad 12, ein zweites Zahnrad 14 sowie ein drittes Zahnrad 16 aufweist, wobei die Zahnräder 12, 14 und 16 axial in Abstand voneinander fest auf der Welle 10 angebracht sind. Die Zahnräder 12 und 14 haben den gleichen Durchmesser und weisen die gleiche Anzahl von Zähnen 18 bzw. 20 auf. Die Zahnräder12 und 14 stehen jeweils in Eingriff mit einer Antriebskette 24 bzw. 26 und treiben diese jeweils an. Das Zahnrad 16 wird über seine Zähne 22 von einem (nicht dargestellten) Motor zu einer Drehbewegung angetrieben, wodurch die Welle 10 und die Zahnräder 12 und 14 zu einer Drehbewegung angetrieben werden. Im gezeigten Beispiel ist die Anzahl der Zähne 22 des Zahnrads 16 größer als die Anzahl der Zähne 18 bzw. 20 der Zahnräder 12 bzw. 14. Der Abschnitt der Welle 10 zwischen den Zahnrädern 12 und 14 bzw. der Abschnitt der Welle 10 zwischen den Zahnrädern 14 und 16 ist im Betrieb der Fahrtreppe aufgrund der unterschiedlichen auf die Zahnräder 12, 14 bzw. 16 wirkenden Drehmomente, welche in die Welle 10 eingeleitet werden, auf Torsion beansprucht.

An den Zahnrädern 12 und 14 ist ein erster Sensor 28 bzw. ein zweiter Sensor 30 vorgesehen, um die Drehung des Zahnrads 12 bzw. des Zahnrads 14 zu erfassen, indem jeweils die Durchgangsbewegung der Zähne 18 bzw. 20 an dem Sensor 28 bzw. 30 erfasst wird. Optional kann ein dritter Sensor 32 an dem Zahnrad 16 vorgesehen sein, um dessen Drehung mittels der Durchgangsbewegung der Zähne 22 an dem Sensor 32 zu erfassen. Die Sensoren 28, 30 und 32 sind ortsfest montiert, wobei sie in radialer Richtung bezüglich des Außenumfangs des jeweiligen Zahnrads 12, 14 bzw. 16 angeordnet sind. Zur Verschleißminimierung arbeiten die Sensoren 28, 30 bzw. 32 vorzugsweise berührungsfrei, z.B. induktiv, optisch oder per Ultraschall, wobei beispielsweise der Abstand zwischen dem jeweiligen Sensor 28, 30, 32 und dem Außenumfang des jeweiligen Zahnrads 12, 14 bzw. 16 erfasst werden kann. Der Durchgang eines Zahns an dem jeweiligen Sensor äußert sich in dem Auftreten eines Bergs in dem zeitlichen Verlauf des von dem jeweiligen Sensor 28, 30, 32 abgegebenen Signals.

Ein solcher beispielhafter Signalverlauf ist in Fig. 2 gezeigt, wobei das Signal des Sensors 28 mit A₁, das Signal des Sensors 30 mit A₂ und das Signal des Sensors 32 mit A₃ bezeichnet ist. Die Zeitspanne zwischen dem Durchgang zweier benachbarter Zähne 18, 20, 22 am jeweiligen Sensor 28, 30, 32 entspricht in der Darstellung von Fig. 2 dem Abstand zweier benachbarter Berge, wobei diese Zeitspannen in Fig. 2 mit T₁, T₂ bzw. T₃ bezeichnet sind. Da die Sensoren 28, 30, 32 synchron zueinander arbeiten, kann der Phasenversatz der entsprechenden Durchgangsbewegung der Zähne am jeweiligen Sensor ermittelt werden, wobei in Fig. 2 der Phasenversatz zwischen der Bewegung des Zahnrads 12 und derjenigen des Zahnrads 14 mit Δϕ₁₂ bezeichnet ist.

Die von den Sensoren 28, 30, 32 abgegebenen Signale werden in eine Auswertungseinheit 34 eingespeist, welche die Signale auswertet und am Ausgang 36 ein Signal entsprechend der durch die Auswertung ermittelten Torsionsfestigkeit der Welle 10 abgibt.

Beispielsweise kann aus der zeitlichen Veränderung des ermittelten Phasenversatzes auf die Torsionsfestigkeit rückgeschlossen werden. Falls beispielsweise der Phasenversatz zwischen den Signalen A₁ und A₂ zunimmt, kann auf eine Abnahme der Torsionsfestigkeit der Welle 10 und damit auf eine Schädigung der Welle 10 geschlossen werden. Falls beispielsweise die Veränderung des Phasenversatzes Δϕ₁₂ einen vorgegebenen Schwellwert übersteigt, kann am Ausgang 36 der Auswertungseinheit 34 ein entsprechendes Alarmsignal ausgegeben werden, um die Fahrtreppe anzuhalten oder zumindest den baldigen Austausch der Welle 10 zu veranlassen.

Da es sich bei der Auswertungseinheit 34 in der Regel um eine digitale Einheit handelt, ist es erforderlich, das jeweilige Sensorsignal mittels eines A/D-Wandlers in üblicher Weise digital abzutasten, so dass in der Praxis das von der Auswertungseinheit 34 auszuwertende Messsignal von der idealisierten Darstellung in Fig. 2 abweichen wird. Vorzugsweise sollte die Abtastung aller Sensorsignale mit einer Auflösung von mindestens 16 Bit erfolgen. Die zeitliche Auflösung der Abtastung sollte so gewählt werden, dass sie feiner als 1/500 der Zeitspanne T₁, T₂ bzw. T₃ zwischen dem Durchgang zweier benachbarter Zähne 18, 20 bzw. 22 ist; vorzugsweise sollte sie feiner als 1/3000 dieser Zeitspanne sein. Bei praktischen Anwendungen sollte die Abtastrate deshalb mindestens 30 kHz betragen.

Um die Phasenlage der Durchgangsbewegung der Zähne des jeweiligen Zahnrads mit hinreichender Genauigkeit zu ermitteln, sollten nicht nur zwei, sondern mindestens neun Zahndurchgänge berücksichtigt werden, wobei die Ermittlung der mittleren Phasenlage durch Kurvenanpassung erfolgt.

Im Beispiel von Fig. 1 weisen die beiden Zahnräder 12 und 14 die gleiche Anzahl von Zähnen 18 bzw. 20 auf, so dass die Zeitspannen T₁ und T₂, d.h. die Periodizität der jeweiligen Sensorsignale A₁ und A₂, gleich ist. In diesem Fall ergibt sich die Phasenverschiebung Δϕ₁₂ zwischen den beiden Signalen A₁ und A₂ ohne weiteres, siehe Fig. 2. Da die Zahl der Zähne 22 des Zahnrads 16 im dargestellten Beispiel größer als diejenige der Zahnräder 12 und 14 ist, ergibt sich eine kürzere Zeitspanne T₃ und somit eine kürzere Periodizität, was keinen direkten Vergleich der Phasenlagen erlaubt. In diesem Fall wird zur Ermittlung des Phasenversatzes zwischen dem Signal A₃ und beispielsweise dem Signal A₂ zunächst die Zeitbasis der beiden Signale so einander angepasst, dass die Zeitspanne in T₂ bzw. T₃ für den Durchgang zweier benachbarter Zähne gleich lang werden (zu diesem Zweck kann entweder die Zeitbasis des Signals A₃ gestreckt oder die Zeitbasis des Signals A₂ gestaucht werden).

Zur grundsätzlichen Überwachung der Torsionsfestigkeit der Welle 10 ist es ausreichend, lediglich zwei der drei Zahnräder 12, 14, 16 hinsichtlich ihrer Drehung zu erfassen. So können beispielsweise die Zahnräder 12 und 14 hinsichtlich ihres Phasenversatzes Δϕ₁₂ mittels der Sensoren 28 bzw. 30 vermessen werden; alternativ können beispielsweise die Zahnräder 12 und 16 hinsichtlich ihres Phasenversatzes mittels der Sensoren 28 bzw. 32 vermessen werden. Es können jedoch auch, wie in Fig. 2 gezeigt, alle drei Zahnräder 12, 14, 16 gemessen werden.

## Patentansprüche

1. Verfahren zum Überwachen der Torsionsfestigkeit einer Welle (10), die fest mit einem ersten Zahnrad (12) und einem zweiten, zu dem ersten Zahnrad axial beabstandeten Zahnrad (14, 16) verbunden ist, wobei auf mindestens eines der beiden Zahnräder ein Drehmoment wirkt, welches in die Welle eingeleitet wird, so dass die Welle in dem Bereich zwischen den beiden Zahnrädern auf Torsion beansprucht wird, wobei mittels eines ersten ortsfesten Sensors (28) die Phase der Drehung des ersten Zahnrads und mittels eines zweiten ortsfesten Sensors (30, 32) synchron dazu die Phase der Drehung des zweiten Zahnrads erfasst wird, indem die Durchgangsbewegung der Zähne (18, 20, 22) des jeweiligen Zahnrads an dem jeweiligen Sensor erfasst wird, wobei der Phasenversatz (Δφ₁₂) der Drehung der beiden Zahnräder ausgewertet wird, um die Torsionsfestigkeit der Welle zu überwachen, und wobei es sich bei der Welle (10) um einen Antrieb einer Fahrtreppe handelt.

2. Verfahren gemäß Anspruch 1, wobei es sich bei dem ersten (12) und dem zweiten Zahnrad (14) jeweils um das Antriebsrad für eine Antriebskette (24, 26) der Fahrtreppe handelt.

3. Verfahren gemäß Anspruch 1, wobei es sich bei dem zweiten Zahnrad um das von einem Motor angetriebene Antriebsrad (16) der Welle (10) handelt.

4. Verfahren gemäß einem der vorhergehenden Ansprüche, wobei das Verfahren im Betrieb der Fahrtreppe ausgeführt wird.

5. Verfahren gemäß einem der vorhergehenden Ansprüche, wobei aus der zeitlichen Veränderung des Phasenversatzes (Δφ₁₂) auf die Torsionsfestigkeit der Welle (10) geschlossen wird.

6. Verfahren gemäß Anspruch 5, wobei ein Alarmsignal ausgegeben wird, wenn die zeitliche Veränderung des Phasenversatzes (Δφ₁₂) einen vorgegebenen Schwellwert übersteigt.

7. Verfahren gemäß einem der vorhergehenden Ansprüche, wobei die Durchgangsbewegung der Zähne (18, 20, 22) des jeweiligen Zahnrads (12, 14, 16) an dem jeweiligen Sensor (28, 30, 32) mit einer zeitlichen Auflösung erfasst wird, die feiner als 1/500 der Zeitspanne zwischen dem Durchgang zweier benachbarter Zähne ist.

8. Verfahren gemäß Anspruch 7, wobei die Durchgangsbewegung der Zähne (18, 20, 22) des jeweiligen Zahnrads (12, 14, 16) an dem jeweiligen Sensor (28, 30, 32) mit einer zeitlichen Auflösung erfasst wird, die feiner als 1/3000 der Zeitspanne zwischen dem Durchgang zweier benachbarter Zähne ist.

9. Verfahren gemäß einem der vorhergehenden Ansprüche, wobei die beiden Zahnräder (12, 14) die gleiche Anzahl von Zähnen (18, 20) aufweisen.

10. Verfahren gemäß einem der Ansprüche 1 bis 8, wobei die beiden Zahnräder (12, 16) eine unterschiedliche Anzahl von Zähnen (18, 22) aufweisen, wobei zur Ermittlung des Phasenversatzes bei der Auswertung der Signale der beiden Sensoren (28, 32) die Zeitbasis der erfassten Durchgangsbewegung so aneinander angepasst wird, dass die Zeitspanne (T₁, T₃) zwischen dem Durchgang zweier benachbarter Zähne für beide Zahnräder gleich lang wird.

11. Verfahren gemäß einem der vorhergehenden Ansprüche, wobei das Signal (A₁, A₂, A₃) des ersten (28) und/oder zweiten Sensors (30, 32) mit einer Auflösung von mindestens 16 bit abgetastet wird.

12. Verfahren gemäß einem der vorhergehenden Ansprüche, wobei die Abtastrate des Signals (A₁, A₂, A₃) des ersten (28) und/oder zweiten Sensors (30, 32) mindestens 30 kHz beträgt.

13. Verfahren gemäß einem der vorhergehenden Ansprüche, wobei die beiden Sensoren (28, 30, 32) in radialer Richtung bzgl. des Außenumfangs des jeweiligen Zahnrads (12, 14, 16) angeordnet ist.

14. Verfahren gemäß einem der vorhergehenden Ansprüche, wobei die Sensoren (28, 30, 32) berührungsfrei arbeiten.

15. Verfahren gemäß Anspruch 14, wobei die Sensoren (28, 30, 32) induktiv, optisch oder per Ultraschall arbeiten.

16. Verfahren gemäß Anspruch 14 oder 15, wobei die Sensoren (28, 30, 32) den Abstand zwischen dem Sensor und dem Außenumfang des jeweiligen Zahnrads (12, 14, 16) erfassen.

17. Verfahren gemäß einem der vorhergehenden Ansprüche, wobei die Phase der Drehung des ersten Zahnrads (12) und die Phase der Drehung des zweiten Zahnrads (14, 16) jeweils unter Berücksichtigung von mindestens neun Zahndurchgängen durch Kurvenanpassung ermittelt wird.

18. System mit einer angetriebenen Welle (10), die einen Antrieb einer Fahrtreppe bildet und fest mit einem ersten Zahnrad (12) und einem zweiten, zu dem ersten Zahnrad axial beabstandeten Zahnrad (14, 16) verbunden ist, wobei das System dergestalt ausgebildet ist, dass im Betrieb der Welle auf mindestens eines der beiden Zahnräder ein Drehmoment wirkt, welches in die Welle eingeleitet wird, so dass die Welle in dem Bereich zwischen den beiden Zahnrädern auf Torsion beansprucht wird, sowie einer Anordnung (22) zum Überwachen der Torsionsfestigkeit der Welle, die einen ersten ortsfesten Sensor (28), einen zweiten ortsfesten Sensor (30, 32) sowie eine Auswertungseinheit (28) aufweist, wobei die Sensoren ausgebildet sind, um mittels des ersten Sensors die Phase der Drehung des ersten Zahnrads und mittels des zweiten Sensors synchron dazu die Phase der Drehung des zweiten Zahnrads zu erfassen, indem die Durchgangsbewegung der Zähne des jeweiligen Zahnrads an dem jeweiligen Sensor erfasst wird, und wobei die Auswertungseinheit ausgebildet ist, um den Phasenversatz (Δφ₁₂) der Drehung der beiden Zahnräder zu ermitteln und auszuwerten, um die Torsionsfestigkeit der Welle zu überwachen.

## Claims

1. Method for monitoring the torsional strength of a shaft (10) which is connected fixedly to a first gearwheel (12) and to a second gearwheel (14, 16) spaced apart axially from the first gearwheel, there acting on at least one of the two gearwheels a torque which is introduced into the shaft, so that the shaft is subjected to torsional stress in the region between the two gearwheels, the phase of the rotation of the first gearwheel being detected by means of a first fixed sensor (28) and the phase of rotation of the second gearwheel being detected synchronously thereto by means of a second fixed sensor (30, 32), in that the passage movement of the teeth (18, 20, 22) of the respective gearwheel at the respective sensor is detected, the phase offset (Δφ₁₂) of the rotation of the two gearwheels being evaluated, in order to monitor the torsional strength of the shaft, and the shaft (10) being a drive of an escalator.

2. Method according to Claim 1, the first (12) and the second (14) gearwheel in each case being the driving wheel for a drive chain (24, 26) of the escalator.

3. Method according to Claim 1, the second gearwheel being the motor-driven driving wheel (16) of the shaft (10).

4. Method according to one of the preceding claims, the method being carried out when the escalator is in operation.

5. Method according to one of the preceding claims, the torsional strength of the shaft (10) being deduced from the time variation of the phase offset (Δφ₁₂).

6. Method according to Claim 5, an alarm signal being emitted when the time variation of the phase offset (Δφ₁₂) overshoots a predetermined threshold value.

7. Method according to one of the preceding claims, the passage movement of the teeth (18, 20, 22) of the respective gearwheel (12, 14, 16) at the respective sensor (28, 30, 32) being detected with a time resolution which is finer than 1/500 of the time span between the passage of two adjacent teeth.

8. Method according to Claim 7, the passage movement of the teeth (18, 20, 22) of the respective gearwheel (12, 14, 16) at the respective sensor (28, 30, 32) being detected with a time resolution which is finer than 1/3000 of the time span between the passage of two adjacent teeth.

9. Method according to one of the preceding claims, the two gearwheels (12, 14) having the same number of teeth (18, 20).

10. Method according to one of Claims 1 to 8, the two gearwheels (12, 16) having a different number of teeth (18, 22), and, to determine the phase offset in the evaluation of the signals from the two sensors (28, 32), the time bases of the detected passage movements are adapted to one another such that the time span (T₁, T₃) between the passage of two adjacent teeth becomes of equal length for both gearwheels.

11. Method according to one of the preceding claims, the signal (A₁, A₂, A₃) from the first (28) and/or the second (30, 32) sensor being sensed with a resolution of at least 16 bit.

12. Method according to one of the preceding claims, the sensing rate of the signal (A₁, A₂, A₃) from the first (28) and/or the second (30, 32) sensor amounting to at least 30 kHz.

13. Method according to one of the preceding claims, the two sensors (28, 30, 32) being arranged in the radial direction with respect to the outer circumference of the respective gearwheel (12, 14, 16).

14. Method according to one of the preceding claims, the sensors (28, 30, 32) operating in a contact-free manner.

15. Method according to Claim 14, the sensors (28, 30, 32) operating inductively, optically or ultrasonically.

16. Method according to Claim 14 or 15, the sensors (28, 30, 32) detecting the spacing between the sensor and the outer circumference of the respective gearwheel (12, 14, 16).

17. Method according to one of the preceding claims, the phase of rotation of the first gearwheel (12) and the phase of rotation of the second gearwheel (14, 16) being determined in each case by taking into account at least nine tooth passes by curve matching.

18. System with a driven shaft (10) which forms a drive of an escalator and which is connected fixedly to a first gearwheel (12) and to a second gearwheel (14, 16) spaced apart axially from the first gearwheel, the system being designed in such a way that, when the shaft is in operation, there acts on at least one of the two gearwheels a torque which is introduced into the shaft, so that the shaft is subjected to torsional stress in the region between the two gearwheels, and with an arrangement (22) for monitoring the torsional strength of the shaft, which has a first fixed sensor (28), a second fixed sensor (30, 32) and an evaluation unit (34), the sensors being designed in order to detect the phase of rotation of the first gearwheel by means of the first sensor and to detect the phase of rotation of the second gearwheel synchronously thereto by means of the second sensor, in that the passage movement of the teeth of the respective gearwheel at the respective sensor is detected, and the evaluation unit being designed in order to determine and evaluate the phase offset (Δφ₁₂) of the rotation of the two gearwheels, in order to monitor the torsional strength of the shaft.

## Revendications

1. Procédé de surveillance de la résistance à la torsion d'un arbre (10) qui est relié à demeure avec une première roue dentée (12) et avec une deuxième roue dentée (14, 16) espacée de la première roue dentée dans le sens axial, un couple agissant sur au moins l'une des deux roues dentées, lequel est induit dans l'arbre de sorte que l'arbre est soumis à une contrainte de torsion dans la zone entre les deux roues dentées, la phase de rotation de la première roue dentée étant détectée au moyen d'un premier capteur (28) en position fixe et la phase de rotation de la deuxième roue dentée étant détectée de manière synchrone au moyen d'un deuxième capteur (30, 32) en position fixe en détectant le mouvement de passage des dents (18, 20, 22) de la roue dentée correspondante au niveau du capteur correspondant, le déphasage (Δ∅₁₂) de la rotation des deux roues dentées étant analysé afin de surveiller la résistance à la torsion de l'arbre et l'arbre (10) étant un mécanisme d'entraînement d'un escalier roulant.

2. Procédé selon la revendication 1, la première (12) et la deuxième (14) roue dentée étant respectivement la roue d'entraînement d'une chaîne d'entraînement (24, 26) de l'escalier roulant.

3. Procédé selon la revendication 1, la deuxième roue dentée étant la roue d'entraînement (16) de l'arbre (10) qui est entraînée par un moteur.

4. Procédé selon l'une des revendications précédentes, le procédé étant mis en oeuvre dans la commande de l'escalier roulant.

5. Procédé selon l'une des revendications précédentes, la résistance à la torsion de l'arbre (10) étant déduite de la variation dans le temps du déphasage (Δ∅₁₂).

6. Procédé selon la revendication 5, un signal d'alarme étant émis lorsque la variation dans le temps du déphasage (Δ∅₁₂) dépasse une valeur de seuil prédéfinie.

7. Procédé selon l'une des revendications précédentes, le mouvement de passage des dents (18, 20, 22) de la roue dentée (12, 14, 16) correspondante au niveau du capteur (28, 30, 32) correspondant étant détecté avec une résolution dans le temps qui est meilleure que 1/500 de l'intervalle de temps entre le passage de deux dents voisines.

8. Procédé selon la revendication 7, le mouvement de passage des dents (18, 20, 22) de la roue dentée (12, 14, 16) correspondante au niveau du capteur (28, 30, 32) correspondant étant détecté avec une résolution dans le temps qui est meilleure que 1/3000 de l'intervalle de temps entre le passage de deux dents voisines.

9. Procédé selon l'une des revendications précédentes, les deux roues dentées (12, 14) présentant le même nombre de dents (18, 20).

10. Procédé selon l'une des revendications 1 à 8, les deux roues dentées (12, 16) présentant un nombre de dents (18, 22) différent, la détermination du déphasage lors de l'analyse des signaux des deux capteurs (28, 32) s'effectuant en adaptant l'une à l'autre les bases de temps des mouvements de passage détectés de telle sorte que l'intervalle de temps (T₁, T₃) entre le passage de deux dents voisines devienne identique pour les deux roues dentées.

11. Procédé selon l'une des revendications précédentes, le signal (A₁, A₂, A₃) du premier (28) et/ou du deuxième (30, 32) capteur étant échantillonné avec une résolution d'au moins 16 bits.

12. Procédé selon l'une des revendications précédentes, la fréquence d'échantillonnage du signal (A₁, A₂, A₃) du premier (28) et/ou du deuxième (30, 32) capteur étant égale à au moins 30 kHz.

13. Procédé selon l'une des revendications précédentes, les deux capteurs (28, 30, 32) étant disposés dans le sens radial par rapport au pourtour extérieur de la roue dentée (12, 14, 16) correspondante.

14. Procédé selon l'une des revendications précédentes, les capteurs (28, 30, 32) fonctionnant sans contact.

15. Procédé selon la revendication 14, les capteurs (28, 30, 32) fonctionnant de manière inductive, optique ou par ultrasons.

16. Procédé selon la revendication 14 ou 15, les capteurs (28, 30, 32) détectant l'écart entre le capteur et le pourtour extérieur de la roue dentée (12, 14, 16) correspondante.

17. Procédé selon l'une des revendications précédentes, la phase de la rotation de la première roue dentée (12) et la phase de la rotation de la deuxième roue dentée (14, 16) étant déterminées par adaptation des courbes en tenant respectivement compte d'au moins neuf passages de dent.

18. Système comprenant un arbre entraîné (10) qui forme un mécanisme d'entraînement d'un escalier roulant et qui est relié à demeure avec une première roue dentée (12) et avec une deuxième roue dentée (14, 16) espacée de la première roue dentée dans le sens axial, le système étant configuré de telle sorte que lors du fonctionnement de l'arbre, un couple agit sur au moins l'une des deux roues dentées, lequel est induit dans l'arbre de sorte que l'arbre est soumis à une contrainte de torsion dans la zone entre les deux roues dentées, et comprenant un arrangement (22) pour surveiller la résistance à la torsion de l'arbre, lequel présente un premier capteur (28) en position fixe, un deuxième capteur (30, 32) en position fixe ainsi qu'une unité d'analyse (28), les capteurs étant configurés pour détecter, au moyen du premier capteur, la phase de rotation de la première roue dentée et, au moyen du deuxième capteur (30, 32) et de manière synchrone, la phase de rotation de la deuxième roue dentée en détectant le mouvement de passage des dents de la roue dentée correspondante au niveau du capteur correspondant, l'unité d'analyse étant configurée pour déterminer et analyser le déphasage (Δ∅₁₂) de la rotation des deux roues dentées afin de surveiller la résistance à la torsion de l'arbre.
